# EUROPEAN PATENT SPECIFICATION

(11) **EP 1 076 903 B1**
(45) Date of publication and mention of the grant of the patent: **12.02.2003**
(21) Application number: 99939763.1
(22) Date of filing: 04.05.1999
(51) Int. Cl.: G11B 20/00

(54) **ANTI-COPYING METHODS AND DEVICES FOR DIGITAL INFORMATION SIGNALS**
ANTI-KOPIEREN VERFAHREN UND VORRICHTUNGEN FÜR DIGITALE INFORMATIONSSIGNALE
PROCEDES ET DISPOSITIFS ANTIPIRATAGE POUR SIGNAUX D'INFORMATIONS NUMERIQUES

(30) Priority: 04.05.1998 EP 98201432; 30.06.1998 US 106858
(43) Date of publication of application: 21.02.2001
(73) Proprietor: Spiro J. Pandelidis High Tech Applications, 16345 Athens (GR)
(72) Inventor: WIJNEN, Arie Marinus, Hayes, Middlesex UB4 8LB (GB); PANDELIDIS, Spiro John, GR-163 45 Athens (GR)
(74) Representative: Mertens, Hans Victor
(86) International application number: PCT/EP99/03231
(87) International publication number: WO 99/057723

(56) References cited:
- EP-A- 0 298 691
- EP-A- 0 348 570
- EP-A- 0 372 601
- EP-A- 0 392 612
- WO-A-96/05595
- US-A- 4 644 422
- US-A- 4 802 212
- US-A- 5 394 274
- PATENT ABSTRACTS OF JAPAN vol. 1999, no. 02, 26 February 1999 (1999-02-26) & JP 10 302404 A (SANYO ELECTRIC CO LTD), 13 November 1998 (1998-11-13)

## Description

### BACKGROUND OF THE INVENTION

The present invention relates to anti-copying methods and devices for audio and/or video signals, in particular digital audio signals, and for software information.

Present day digital techniques allow perfect copies of audio signals to be made. For example, the digital audio information of a compact disc (CD) can be digitally registered on tape or can even be used to physically reproduce the CD by means of a so-called CD burner (recorder for compact discs). The possibility of digital copying, producing perfect copies of the original, has resulted in many illegal copies of CDs or other information carriers being made. This in turn leads to a substantial loss in copyright royalties. For this reason, there is a need for protection against copying of audio signals.

The Prior Art offers several copy protection methods which all have drawbacks.

European Patent Application EP 0 298 691, for example, proposes to modulate an audio signal by an additional signal. The degree of modulation is such that the modulation is not audible. Instead, a detector is used to detect the modulating signal. As in this known method the copy protection signal is not audible in the copy unless special equipment is used, its uselessness is severely limited.

European Patent Application EP 0 348 570 discloses a copy protection method in which an audible "spoiler signal" is added to the original audio signal. This has the disadvantage that the resulting audio signal is always distorted, even when played back by an authorized party.

US-A-5 832 088 describes a method for preventing the copying of effective data recorded on a carrier by inserting dummy data between the effective data. By this measure the total recorded data length will be such that part of the effective data falls outside the range of data which can be copied to a blank carrier, making copying much less attractive.

### SUMMARY OF THE INVENTION

It is an object of the present invention to provide a method for protecting audio signals against unauthorized copying which does not suffer from the drawbacks of the Prior Art.

It is a further object of the present invention to provide a method for protecting audio signals which does not disturb the replay of those signals by authorized persons.

It is an additional object of the present invention to provide a method for protecting audio signals which does not require special equipment on the part of the user.

It is a yet further object of the present invention to provide devices for protectedly recording data carriers, as well as copy protected information carriers.

Aspects of the present invention are provided in the appended claims.

### BRIEF DESCRIPTION OF THE DRAWINGS

The present invention will be further explained with reference to the accompanying drawings, in which:
Figs. 1a and 1b schematically show possible applications of the method of the present invention; and
Fig. 2 schematically shows a device for writing digital data to an information carrier in a copy-protected manner.

### DETAILED DESCRIPTION OF EXEMPLARY EMBODIMENTS

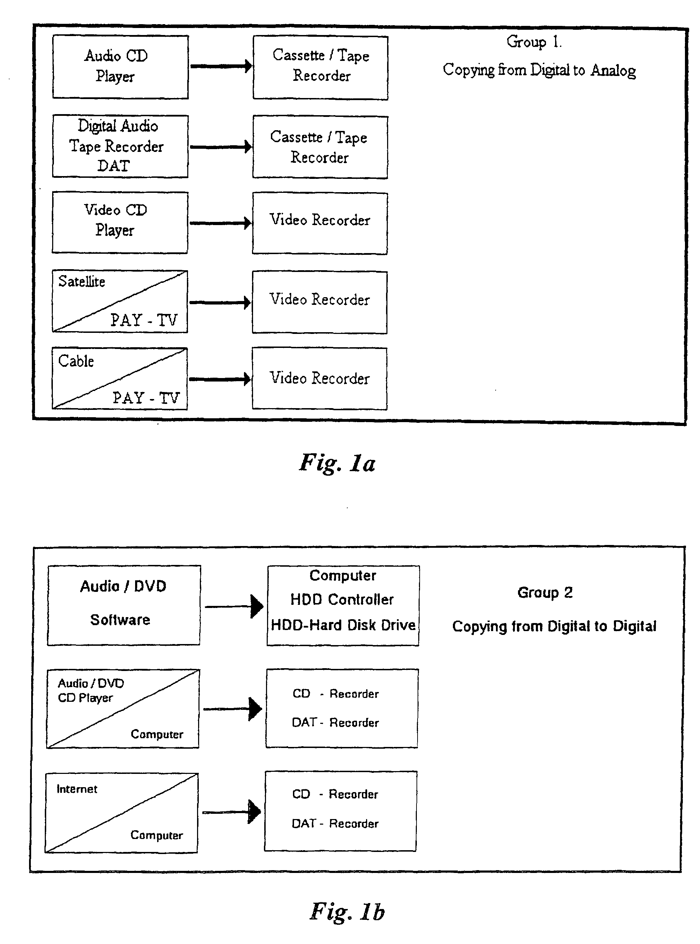

As shown in Figs. 1a and 1b, the copying of (digital) audio signals may be considered to involve two categories or groups of copying operations:
Group 1: from digital to analog signals, and
Group 2: from digital to digital signals.

The following discussion will focus on the copying of digital audio signals, that is audio signals registered in a digital representation (sampled audio signals represented digitally by ones and zeros).

Especially group 2 (Fig. 1b) poses problems with respect to copyright, as the CD-burners and DAT-recorders normally allow perfect copies of the original signals to be made (it will be understood that so-called DAT-recorders are tape/cassette recorders which digitally register audio signals on tape).

In accordance with the present invention, copy protection is achieved by modifying the registration of digital information on a digital information carrier. In the case of a CD, the digital information is recorded on the CD's surface by making a track of small holes in the surface using a laser beam (the so-called "burning" of the CD). It has been found that briefly interrupting the laser beam, resulting in a number of holes not being made, provides a very effective copy protection. That is, the CD thus protected may be played normally, resulting in no signal distortion at all, provided the interruptions in the track are short enough. However, when the contents (the signal) of the CD are copied to e.g. a hard disc, the resulting digital information is distorted to the point of being useless.

The interruption of the recording or "burning" process of audio CDs can be effected in several ways:
- short interruptions during pauses, at the beginning and/or the end of the CD and/or between music pieces; and/or
- short interruptions at the zero crossings of the audio signals; and/or
- very short interruptions, e.g. of about 1µs or even 1 ns (nano-second), having a repetition frequency lying above the audible range, or even above the sampling rate used.

In the case of video recordings, short interruptions may be effected at the edges of the video image, that is, outside the visible image. Short interruptions may also be used to copy protect software programs recorded on e.g. CD-ROMs. In the latter case, pauses (interruptions) can be created in the software program in order to create "blank spots". This causes uncontrollable digital information inserted in the original software information after coping to e.g. hard disc and/or CD ("on the fly"). In this particular case, the frequency of the interruptions may lie within the audible range.

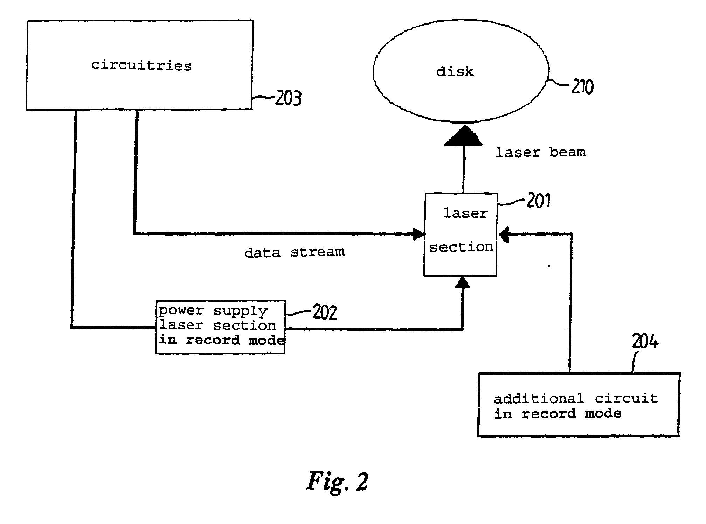

The arrangement of Fig. 2 comprises a laser section 201, a power supply 202 and data circuits 203 of a CD recorder. The data circuits 203 provide a digital data stream representing data to be recorded. Accordingly, the laser of laser section 201 is modulated by the data stream when burning (making small holes in) CD 210. During the burning process, the CD is rotated by rotation means (not shown). Power supply 202 continuously provides power to the laser section 201.

According to the present invention an additional circuit 204 is provided which briefly interrupts the laser, e.g. by briefly interrupting the power supplied to it. To this end, the interruption circuit 204 may be programmed to cause interruptions on a regular basis or at predetermined moments in time. Alternatively, or additionally, the data stream originating from circuits 203 may be fed to the interruption circuit 204 to effect data-dependent interruptions. The latter option enables the interruptions to occur e.g. during pauses or at zero crossings of the audio or video signal. Thus a very effective copy protection may be attained, which may also be used with combining the original signal with non-audible disturbance signals.

Instead of using an additional interruption circuit 204, the hardware and/or software of data circuits 203 may be modified so as to cause interruptions in the laser beam.

Although the invention has been described primarily with reference to audio signals, it will be understood that its principles can be applied to other signals as well, e.g. video signals.

## Claims

1. Method of producing a copy-protected digital information carrier (210), comprising the step of recording digital information on the carrier (210), **characterized by** interrupting the recording during short intervals corresponding to playing times between 100 microseconds and 1 nanosecond.

2. Method according to claim 1, wherein the interruptions have a repetition frequency lying above the audible range.

3. Method according to claim 1, wherein the interruptions have a repetition frequency lying above the sampling rate used.

4. Method according to any of claims 1-3, wherein the digital information is audio information, and the interruptions are made during pauses.

5. Method according to any of claims 1-4, wherein the digital information is audio information, and the interruptions are made at the beginning and/or the end of the carrier.

6. Method according to any of claims 1-5, wherein the digital information is audio information, and the interruptions are made between music pieces.

7. Method according to any of claims 1-6, wherein the digital information is audio information, and the interruptions are made at the zero crossings of the audio signals.

8. Method according to claim 1, wherein the digital information is video information, and the interruptions are effected at the edges of the video image, outside the visible range.

9. Device for producing a copy-protected digital information carrier (210), comprising:
data circuits (203) providing a digital data stream representing digital data to be recorded;
a laser section (201) being modulated by the data stream when recording the digital data on the carrier,
**characterized in that** the data circuits (203) cause interruptions in the recording by the laser section (201).

10. Device for producing a copy-protected digital information carrier (210), comprising:
data circuits (203) providing a digital data stream representing digital data to be recorded;
a laser section (201) being modulated by the data stream when recording the digital data on the carrier,
**characterized by** an interruption circuit (204) for briefly interrupting the recording by the laser section (201).

11. Device according to claim 10, wherein a power supply (202) provides power to the laser section (201), and the interruption circuit (204) is adapted to interrupt the power supplied to the laser section (201).

12. Device according to claim 10 or 11, wherein the interruption circuit (204) is programmed to cause interruptions on a regular basis.

13. Device according to claim 10 or 11, wherein the interruption circuit (204) is programmed to cause interruptions at predetermined moments in time.

14. Device according to any of claims 10-13, wherein the data stream originating from the data circuits (203) is fed to the interruption circuit (204) to effects data-dependent interruptions.

15. Information carrier (210), provided with a track of marks representing digital information, **characterized in that** the tracks are interrupted over short distances to provide copy protection, the short distances corresponding to playing times between 100 microseconds and 1 nanosecond.

## Patentansprüche

1. Verfahren zum Erzeugen eines kopiergeschützten Trägers digitaler Informationen (210), umfassend den Schritt des Aufzeichnens digitaler Informationen auf dem Träger (210), **gekennzeichnet durch** ein Unterbrechen der Aufzeichnung während kurzer Intervalle, die Wiedergabezeiten zwischen 100 Mikrosekunden und 1 Nanosekunde entsprechen.

2. Verfahren nach Anspruch 1, wobei die Unterbrechungen eine Wiederholfrequenz haben, die über dem hörbaren Bereich liegt.

3. Verfahren nach Anspruch 1, wobei die Unterbrechungen einer Wiederholfrequenz haben, die über der verwendeten Abtastrate liegt.

4. Verfahren nach einem der Ansprüche 1-3, wobei die digitalen Informationen Audioinformationen sind und die Unterbrechungen während Pausen ausgeführt werden.

5. Verfahren nach einem der Ansprüche 1-4, wobei die digitalen Informationen Audioinformationen sind und die Unterbrechungen zu Beginn und/oder am Ende des Trägers ausgeführt werden.

6. Verfahren nach einem der Ansprüche 1-5, wobei die digitalen Informationen Audioinformationen sind und die Unterbrechungen zwischen Musikstücken ausgeführt werden.

7. Verfahren nach einem der Ansprüche 1-6, wobei die digitalen Informationen Audioinformationen sind und die Unterbrechungen bei den Nulldurchgängen der Audiosignale durchgeführt werden.

8. Verfahren nach Anspruch 1, wobei die digitalen Informationen Videoinformationen sind und die Unterbrechungen an den Rändern des Videobildes außerhalb des sichtbaren Bereichs bewirkt werden.

9. Einrichtung zum Erzeugen eines kopiergeschützten Trägers digitaler Informationen (210), aufweisend:
Datenschaltungen (203), die einen digitalen Datenstrom zur Verfügung stellen, der aufzuzeichnende digitale Daten darstellt;
einen Laserabschnitt (201), der von dem Datenstrom moduliert wird, wenn die digitalen Daten auf dem Träger aufgezeichnet werden,
**gekennzeichnet dadurch, daß** die Datenschaltungen (203) Unterbrechungen in der Aufzeichnung durch den Laserabschnitt (201) bewirken.

10. Einrichtung zum Erzeugen eines kopiergeschützten Trägers digitaler Informationen (210), aufweisend:
Datenschaltungen (203), die einen digitalen Datenstrom zur Verfügung stellen, der aufzuzeichnende digitale Daten darstellt;
einen Laserabschnitt (201), der von dem Datenstrom moduliert wird, wenn die digitalen Daten auf dem Träger aufgezeichnet werden,
**gekennzeichnet durch** eine Unterbrechungsschaltung (204) zum kurzzeitigen Unterbrechen der Aufzeichnung **durch** den Laserabschnitt (201).

11. Einrichtung nach Anspruch 10, wobei eine Spannungsversorgung (202) die Energie für den Laserabschnitt (201) zur Verfügung stellt und die Unterbrechungsschaltung (204) so ausgebildet ist, daß sie die an den Laserabschnitt (201) angelegte Spannungsversorgung unterbricht.

12. Einrichtung nach Anspruch 10 oder 11, wobei die Unterbrechungsschaltung (204) so programmiert ist, daß sie Unterbrechungen auf einer regelmäßigen Basis bewirkt.

13. Einrichtung nach Anspruch 10 oder 11, wobei die Unterbrechungsschaltung (204) so programmiert ist, daß sie Unterbrechungen zu vorgegebenen Zeitpunkten bewirkt.

14. Einrichtung nach einem der Ansprüche 10 - 13, wobei der Datenstrom, der aus den Datenschaltungen (203) herrührt, der Unterbrechungsschaltung (204) eingespeist wird, um datenabhängige Unterbrechungen zu bewirken.

15. Informationsträger (210), der mit einer Spur von Markierungen versehen ist, die digitale Informationen darstellen, **gekennzeichnet dadurch, daß** die Spuren über kurze Distanzen unterbrochen sind, um einen Kopierschutz zur Verfügung zu stellen, wobei die kurzen Distanzen Wiedergabezeiten zwischen 100 Mikrosekunden und 1 Nanosekunde entsprechen.

## Revendications

1. Procédé de production d'un support d'informations numériques protégé contre la copie (210), comprenant l'étape qui consiste à enregistrer des informations numériques sur le support (210), **caractérisé par** l'interruption de l'enregistrement pendant de courts intervalles correspondant à des durées de lecture compris entre 100 microsecondes et 1 nanoseconde.

2. Procédé selon la revendication 1, dans lequel les interruptions ont une fréquence de répétition qui se trouve au-dessus de la plage audible.

3. Procédé selon la revendication 1, dans lequel les interruptions ont une fréquence de répétition qui est supérieure à la cadence d'échantillonnage utilisée.

4. Procédé selon l'une quelconque des revendications 1 à 3, dans lequel les informations numériques sont des informations audio, et les interruptions sont effectuées pendant des pauses.

5. Procédé selon l'une quelconque des revendications 1 à 4, dans lequel les informations numériques sont des informations audio, et les interruptions sont effectuées au début et/ou à la fin du support.

6. Procédé selon l'une quelconque des revendications 1 à 5, dans lequel les informations numériques sont des informations audio, et les interruptions sont effectuées entre des morceaux musicaux.

7. Procédé selon l'une quelconque des revendications 1 à 6, dans lequel les informations numériques sont des informations audio, et les interruptions sont effectuées aux passages à zéro des signaux audio.

8. Procédé selon la revendication 1, dans lequel les informations numériques sont des informations vidéo, et les interruptions sont effectuées aux bords des images vidéo, à l'extérieur de la plage visible.

9. Dispositif pour la production d'un support d'informations numériques protégé contre la copie (210), comprenant :
des circuits de données (203) émettant un flux de données numériques représentant des données numériques à enregistrer ;
une section laser (201) modulée par le flux de données lors de l'enregistrement des données numériques sur le support ;
**caractérisé en ce que** les circuits de données (203) provoquent des interruptions dans l'enregistrement par la section laser (201).

10. Dispositif pour la production d'un support d'informations numériques protégé contre la copie (210), comprenant :
des circuits de données (203) émettant un flux de données numériques représentant des données numériques à enregistrer ;
une section laser (201) modulée par le flux de données lors de l'enregistrement des données numériques sur le support ;
**caractérisé par** un circuit d'interruption (204) servant à interrompre brièvement l'enregistrement par la section laser (201).

11. Dispositif selon la revendication 10, dans lequel une alimentation (202) fournit de l'énergie à la section laser (201), et le circuit d'interruption (204) est prévu pour interrompre l'énergie fournie à la section laser (201).

12. Dispositif selon la revendication 10 ou 11, dans lequel le circuit d'interruption (204) est programmé pour provoquer des interruptions à intervalles réguliers.

13. Dispositif selon la revendication 10 ou 11, dans lequel le circuit d'interruption (204) est programmé pour provoquer des interruptions à des moments prédéterminés dans le temps.

14. Dispositif selon l'une quelconque des revendications 10 à 13, dans lequel le flux de données émis par les circuits de données (203) est envoyé au circuit d'interruption (204) pour qu'il effectue des interruptions dépendant des données.

15. Support d'informations (210), pourvu d'une piste de marques représentant des informations numériques, **caractérisé en ce que** les pistes sont interrompues sur de courtes distances pour offrir une protection contre la copie, les courtes distances correspondant à des temps de lecture compris entre 100 microsecondes et 1 nanoseconde.
